# EUROPEAN PATENT APPLICATION

(11) **EP 4 706 861 A1**
(43) Date of publication of application: **11.03.2026**
(21) Application number: 25183222.6
(22) Date of filing: 17.06.2025
(51) Int. Cl.: B23K 20/10, B23K 101/36

(54) **ULTRASONIC WELDING DEVICE**

(30) Priority: 05.09.2024 KR 20240120844
(71) Applicant: SAMSUNG SDI CO., LTD., Yongin-si, Gyeonggi-do 17084 (KR)
(72) Inventor: KIM, Dong Hyun, 17084 Yongin-si, Gyeonggi-do (KR); SEO, Ye Jin, 17084 Yongin-si, Gyeonggi-do, (KR); MOON, Eun Jeong, 17084 Yongin-si, Gyeonggi-do (KR)
(74) Representative: Gulde & Partner

(57) **Abstract**

An ultrasonic welding device (1000), comprising:
an anvil configured to support a lower portion of a welding target; and
a welding horn (1400) above the anvil, the welding target being between the welding horn and the anvil, and the welding horn including a body (1410), a head (1420, 1420a) at an end of the body (1410), and movable welding knurls (1440, 1440a, 1440c, 1440g) on a surface of the head (1420, 1420a).

## Description

### BACKGROUND

### 1. Field

Embodiments relates to an ultrasonic welding device, a method of manufacturing a secondary battery, and a secondary battery.

### 2. Description of the Related Art

Unlike primary batteries that are not designed to be (re)charged, secondary (or rechargeable) batteries are batteries that are designed to be discharged and recharged. Low-capacity secondary batteries are used in portable small electronic devices, such as smart phones, feature phones, notebook(laptop) computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The information disclosed in this section is provided only for enhancement of understanding of the background of the disclosure and therefore it may contain information that does not constitute related (or the prior) art.

### SUMMARY

According to various embodiments, a head (e.g., a welding head) of a welding horn is provided, wherein the head includes movable welding knurls arranged thereat. The head may be configured as described herein with refence to the head, the welding horn, and/or the ultrasonic welding device.

According to various embodiments, a welding horn is provided, the welding horn may include a body, a head at an end of the body, and movable welding knurls arranged at the head. The welding horn may be configured as described herein with refence to the welding horn and/or the ultrasonic welding device.

According to various embodiments, an ultrasonic welding device may include a welding horn and may further include an anvil configured to support a lower portion of a welding target. The welding horn may be disposed above the anvil (e.g., during welding). The welding target may be disposed between the welding horn and the anvil (e.g., during welding).

According to various embodiments, the movable welding knurls may be in a configuration to allow for a movement relative to the surface of the head. According to various embodiments, the movable welding knurls may be in a configuration to allow for a movement to adjust a position of the movable welding knurls relative to the welding target. According to various embodiments, the movable welding knurls may be in a configuration to allow for a movement of one of the movable welding knurls relative to another one of the movable welding knurls.

According to some embodiments, an ultrasonic welding device may include an anvil configured to support a lower portion of a welding target; and a welding horn disposed above the welding target and including a body, a head provided on one end of the body, and a plurality of welding knurls provided on one surface of the head, wherein the welding knurls ascend or descend.

The welding knurls may be disposed to have a plurality of rows or a plurality of columns, or the welding knurls may be disposed to have a plurality of rows and a plurality of columns.

Each of the welding knurls may include a screw thread or a screw groove at at least a portion of an outer surface thereof.

The head may include a screw groove corresponding to the screw thread of each of the welding knurls or a screw thread corresponding to the screw groove of each of the welding knurls.

Each of the welding knurls may ascend or descend by rotation in a state of being coupled to the head.

Each of the welding knurls may include a protrusion protruding from an outer surface thereof.

The head may include a vertical hole and a plurality of horizontal holes, into which the protrusions of the welding knurls are inserted, respectively.

The number of horizontal holes may be odd.

In the welding knurls, the protrusion may be inserted into one of the horizontal holes in the state of being coupled to the head.

In a basic state, the protrusion of each of the welding knurls may be inserted into the horizontal hole disposed at the middle of the horizontal holes.

In the ascending state, the protrusion of each of the welding knurls may be inserted into the horizontal hole defined at an upper side among the horizontal holes.

In a basic state, the protrusion of each of the welding knurls may be inserted into the horizontal hole defined at a lower side among the horizontal holes.

According to some embodiments, a method of manufacturing a secondary battery includes forming an electrode assembly including negative electrode base material tabs and positive electrode base material tabs, and welding a pair of lead tabs to the negative electrode base material tabs and the positive electrode base material tabs, respectively, by the ultrasonic welding device, such that the pair of lead tabs are electrically connected to the negative electrode base material tabs and the positive electrode base material tabs, respectively

According to some embodiments, a secondary battery includes an electrode assembly including a negative electrode plate provided with a plurality of negative electrode base material tabs, a positive electrode plate provided with a plurality of positive electrode base material tabs, and a separator interposed between the negative electrode plate and the positive electrode plate; and a pair of lead tabs electrically connected to the negative electrode base material tabs and the positive electrode base material tabs, respectively, wherein the negative electrode base material tabs and the positive electrode base material tabs are welded to the lead tabs by the ultrasonic welding device according to any one of the foregoing claims.

The plurality of negative electrode base material tabs are welded to each other by the ultrasonic welding device according to any one of the foregoing claims.

The plurality of positive electrode base material tabs are welded to each other by the ultrasonic welding device according to any one of the foregoing claims.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a schematic view of an exemplary ultrasonic welding device according to embodiments;
FIG. 2 illustrates a plan view of a welding horn according to embodiments;
FIG. 3 illustrates a side view of the welding horn according to embodiments;
FIG. 4 illustrates a schematic view of a structure of a welding knurl according to embodiments;
FIGS. 5 to 7 illustrate schematic views of a structure and operation state of a welding knurl according to other embodiments;
FIGS. 8 and 9 illustrate schematic views of a process of adjusting a height of the welding knurl in a row direction;
FIGS. 10 and 11 illustrate schematic views of a process of adjusting a height of the welding knurl in a column direction;
FIGS. 12 and 13 illustrate photographs obtained by comparing results of adjusting a height of the welding knurl;
FIG. 14 illustrates a perspective view of an exemplary secondary battery manufactured by the ultrasonic welding device; and
FIG. 15 illustrates a schematic view of a welding portion of the secondary battery in FIG. 14.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Additionally, in order to facilitate understanding of the invention, the attached drawings are not drawn to scale and the dimensions of some components may be exaggerated. Additionally, the same reference numbers may be assigned to the same components in different embodiments.

References to two compared elements, features, etc. as being "the same" may mean that they are "substantially the same". Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the disclosure.

In general, an ultrasonic welding device may be used for welding base material tabs of a secondary battery to each other and welding a base material tab to a lead tab. The ultrasonic welding device is a device that places a welding target on an anvil, presses the welding target through a welding horn of which a welding knurl protrudes, and applies heat and a pressure to the welding target through ultrasonic waves so as to perform welding. Therefore, close contact with the welding target and uniform pressure transmission are important factors. Hereinafter, the ultrasonic welding device according to embodiments will be described.

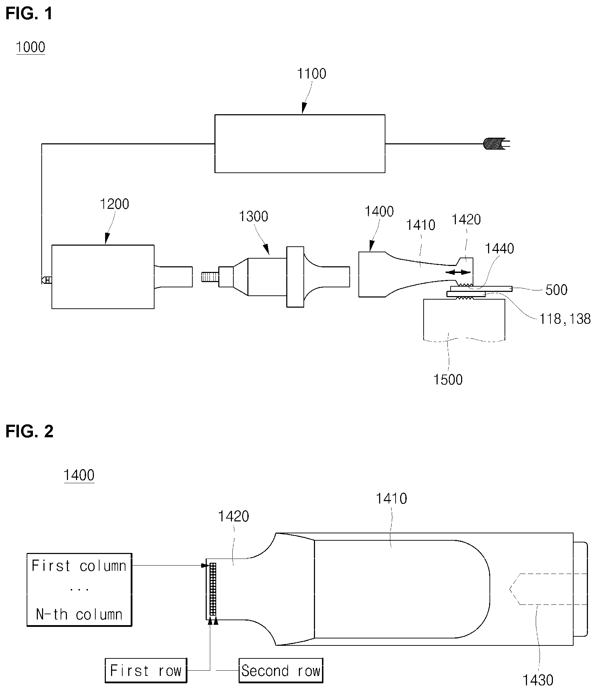

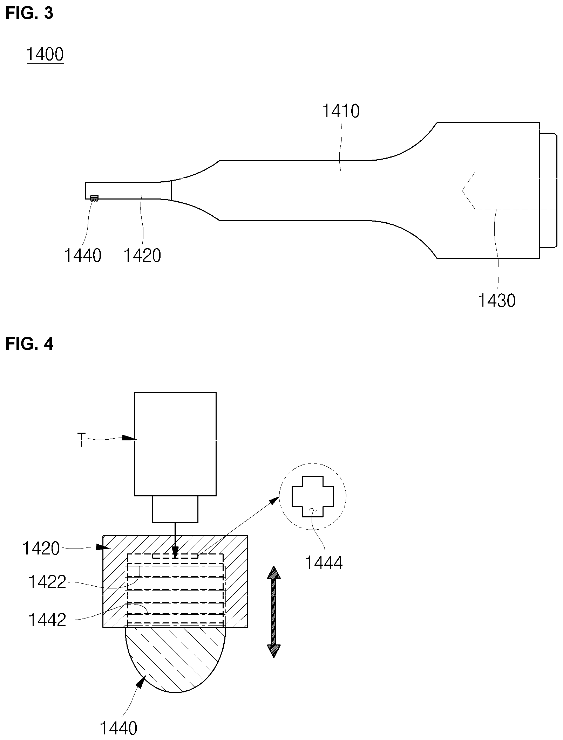

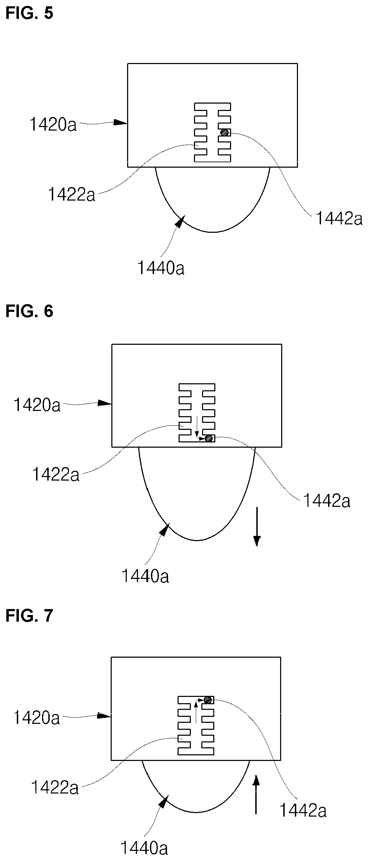

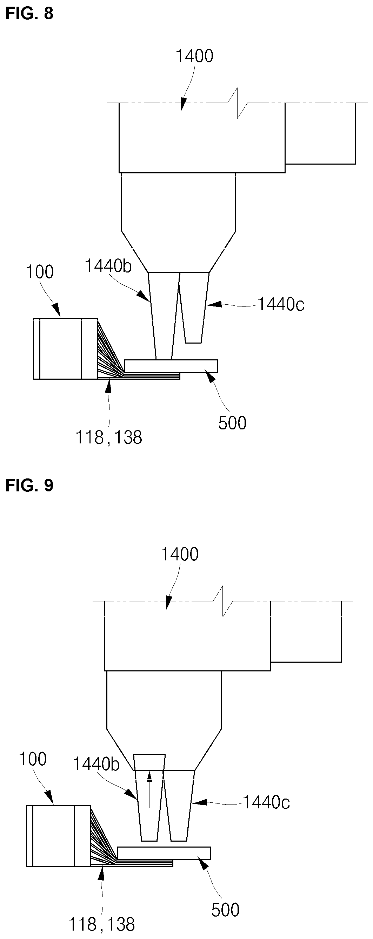

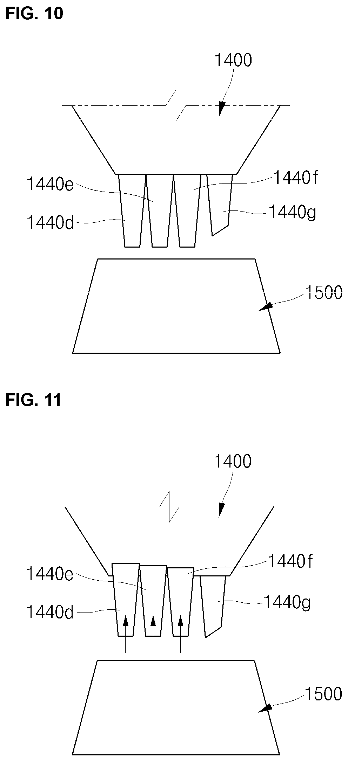

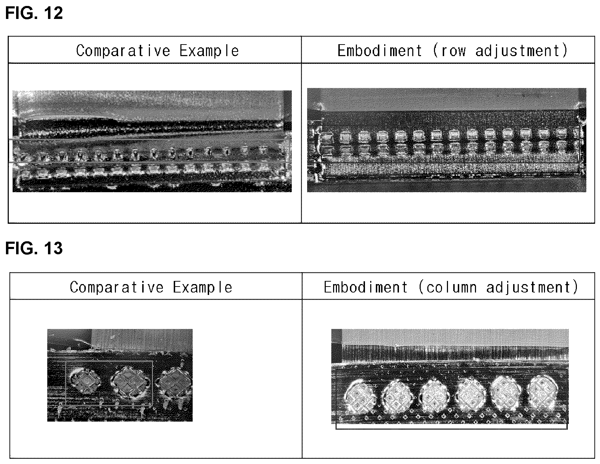

FIG. 1 illustrates a schematic view of an exemplary ultrasonic welding device according to embodiments. FIG. 2 illustrates a plan view of a welding horn according to embodiments. FIG. 3 illustrates a side view of the welding horn according to embodiments. FIG. 4 illustrates a schematic view of a structure of a welding knurl according to embodiments. FIGS. 5 to 7 illustrate schematic views of a structure and operation state of a welding knurl according to other embodiments. FIGS. 8 and 9 illustrate schematic views of a process of adjusting a height of the welding knurl in a row direction. FIGS. 10 and 11 illustrate schematic views of a process of adjusting a height of the welding knurl in a column direction. FIGS. 12 and 13 illustrate photographs obtained by comparing results of adjusting a height of the welding knurl.

Referring to FIG. 1, an exemplary ultrasonic welding device 1000 may include an ultrasonic controller 1100, a vibrator 1200, a booster 1300, a welding horn 1400, and an anvil 1500.

The ultrasonic controller 1100 may convert or generate ultrasonic waves at a frequency required for welding. The vibrator 1200 may also be referred to as a converter and may convert electrical energy into mechanical energy. The booster 1300 may amplify an amplitude of the ultrasonic waves. The welding horn 1400 may secondarily amplify the amplitude of the ultrasonic waves to transmit the amplified ultrasonic waves to the welding target. The anvil 1500 may fix and support the welding target. The welding horn 1400 may be disposed above the welding target, and the anvil 1500 may be disposed below the welding target. Any other suitable configurations of the welding horn 1400 relative to the anvil 1500 and/or within the ultrasonic controller 1100 may be implemented.

The welding horn 1400 according to exemplary embodiments will be described hereinafter in detail below, with reference to FIGS. 2-4.

First, referring to FIGS. 2 to 4, the welding horn 1400 may include a body 1410, a head 1420, a connector 1430, and a plurality of welding knurls 1440.

The body 1410 may be provided in a roughly cylindrical or polyhedral shape. The head 1420 may be provided at a first end of the body 1410, and the connector 1430 may be provided at a second end of the body 1410, e.g., the head 1420 and the connector 1430 may be at opposite ends of the body 1410 along a longitudinal direction of the body 1410. For example, the connector 1430 may be provided inside of the body 1410 and may not be exposed to the outside. The booster 1300 described above may be coupled to the connector 1430, e.g., the second end of the body 1410 including the connector 1430 may face and may be connected to the booster 1300 (FIG. 1). For example, a width of the second end of the body 1410 (e.g., a width along the vertical direction based on FIG. 3) at a side of the connector 1430 may be the largest in the body 1410, and a width of the first end of the body 1410 at a side of the head 1420 may be the smallest in the body 1410. The body 1410 may vibrate in the longitudinal direction of the body 1410 (e.g., along the direction of double-headed arrow in FIG. 1) during the ultrasonic welding.

The head 1420 may have a polyhedral shape of which portions of top and bottom surfaces are flat if viewed from above. For example, referring to FIG. 1, the bottom surface of the head 1420 may be flat and may be positioned to face the anvil 1500, and the top surface of the head 1420 may be opposite the bottom surface of the head 1420. The head 1420 may be provided integrally (e.g., as a monolithic and seamless structure) with the body 1410 or may be separably provided.

The plurality of welding knurls 1440 may be provided on one surface of the head 1420, e.g., the welding knurls 1440 may be provided on the bottom surface of the head 1420 that faces the anvil 1500 (based on FIGS. 1 and 3). The bottom surface of the head 1420 may be provided with a hole into which each of the welding knurls 1440 is inserted (e.g., the holes in the bottom surface of the head 1420 and the welding knurls 1440 may be arranged in a one-to-one correspondence).

The welding knurl 1440 may be referred to as a tip, a protrusion, a point, a nodal point, etc. The welding knurls 1440 may be disposed in a plurality of rows and columns on the bottom surface of the head 1420. For example, the welding knurls 1440 of the present disclosure may be provided (e.g., arranged) in 2 rows and N columns. Depending on a size of the welding target, the number of rows and columns and the arrangement of the welding knurl 1440 may vary. The welding knurl 1440 may have a cross-sectional shape such as circular or square. In some embodiments, the welding knurl 1440 may have a cross-sectional shape such as circular, oval, or square. For convenience, the drawings show an example of the welding knurl 1440 having an elliptical cross-sectional shape.

A comparative knurl may have a protruding protrusion shape on a plate. Therefore, only a portion of the comparative knurls may be worn depending on flatness of the welding target, so unworn welding knurls may be cut to match the height of the remaining knurls, excluding the worn welding knurls, to be reused. However, the processing time may be increased because all the unworn welding knurls require cutting. Further, if the abrasion continues, the plate itself provided with the comparative knurls may require replacement, thereby increasing processing costs.

In contrast, according to embodiments, a structure which is capable of adjusting the height of the welding knurls without cutting is provided. That is, the welding knurl 1440 according to embodiments may be provided in plurality, and each welding knurl 1440 may have a structure that is capable of ascending or descending, e.g., each welding knurl 1440 may be independently movable up and down along a vertical direction (e.g., a normal direction) relative to the bottom surface of the head 1420.

Referring to FIG. 4, each welding knurl 1440 may have a screw thread or a screw groove 1442 on at least a portion of an outer surface thereof. In response to this structure, the head 1420 of the welding horn 1400 may have a screw groove or screw thread 1422 inside a hole into which the welding knurl 1440 is inserted (e.g., the screw groove 1442 and the screw thread 1422 may have complementary shapes fitting into each other). In some embodiments, a separate plate that is coupled to the head 1420 may be provided with a screw groove or a screw thread. If a screw thread is provided on the outer surface of the welding knurl 1440, a screw groove may be provided inside the head 1420. If a screw groove is provided in the outer surface of the welding knurl 1440, a screw thread may be provided inside the head 1420. Therefore, the welding knurl 1440 and the head 1420 may be screw-coupled to each other via the screw thread and the screw groove, similar to coupling of a bolt and a nut. For example, the welding knurl 1440 itself may be rotated by an operator (e.g., manually) to allow the welding knurl 1440 to ascend or descend in the direction of the arrow. In another example, a separate tool T may be used to rotate the welding knurl 1440 to allow the welding knurl 1440 to ascend and descend in the direction of the arrow. For this, a groove into which the tool T is inserted may be provided in an upper end of the welding knurl 1440 (e.g., the tool T may be operated manually or may be automated via a computing device, a controller with a sensor, a processor composed of software, or the like).

Referring to FIGS. 5 to 7, a welding knurl 1440a according to other embodiments may ascend or descend in a structure similar to a gear shift of a vehicle. For example, a head 1420a of the welding horn 1400 may include a height adjustment hole 1422a at one side thereof. The number of height adjustment holes 1422a may be the same as the number of welding knurls 1440a, e.g., each height adjustment hole 1422a may correspond to one welding knurl 1440a. Based on FIG. 5, the height adjustment hole 1422a may include one vertical hole (e.g., the vertical hole may extend in a direction oriented from the bottom surface to the top surface of the head 1420a) and a plurality of horizontal holes (e.g., the plurality of horizontal holes may intersect the vertical hole and may be perpendicular to the vertical hole). For example, the number of horizontal holes may be odd. The plurality of horizontal holes may be defined (e.g., spaced apart from each other) at regular intervals along a length of the vertical hole. For example, the welding knurl 1440a may include a protrusion 1442a protruding from one side of the outer surface.

For example, referring to FIG. 5, a basic setting state of the welding knurl 1440a may be a state in which the protrusion 1442a is inserted (e.g., insertable) into a horizontal hole defined in the middle of the height adjustment hole 1422a. Therefore, the welding knurl 1440a may be maintained in the basic setting state. For example, referring to FIG. 6, the descending state of the welding knurl 1440a may be a state in which the protrusion 1442a is inserted into the horizontal hole defined at the lowermost position of the height adjustment hole 1422a (e.g., at a horizontal hole closest to the bottom surface of the head 1420a). Therefore, the welding knurl 1440a may be maintained in the descending state. For example, referring to FIG. 7, the ascending state of the welding knurl 1440a may be a state in which the protrusion 1442a is inserted into the horizontal hole defined in the uppermost position of the height adjustment hole 1422a (e.g., at a horizontal hole farthest from the bottom surface of the head 1420a). Therefore, the welding knurl 1440a may be maintained in the ascending state. The ascending or descending position of the welding knurl 1440a (i.e., the height of the welding knurl relative to the welding target) may be adjusted depending on the length of the vertical hole and the number of horizontal holes.

The positioning of the welding knurls may be adjusted as follows (in some embodiments, the rows and columns of the welding knurls are based on FIG. 2).

Referring to FIG. 8, depending on the flatness of the welding target (e.g., the base material tabs (118, 138) and the lead tab 500), some rows of the welding knurls may be in contact with the welding target, and some rows of the welding knurls may not be in contact with the welding target. For example, in the welding horn 1400 having a first row of welding knurls 1440b and a second row of welding knurls 1440c, the first row of welding knurls 1440b may be in contact with the welding target, and the second row of the welding knurls 1440c may not be in contact with the welding target. In some embodiments, as illustrated in FIG. 9, the entire first row of welding knurls 1440b may ascend (e.g., may be moved or movable away from the welding target) and may be adjusted to be at a same position as the second row of welding knurls 1440c (e.g., to have tips of the first row of welding knurls 1440b facing the welding target and tips of the second row of welding knurls 1440c facing the welding target at a same height relative to the welding target or anvil 1500).

Referring to FIG. 10, the welding knurls 1440g may be worn out in some columns. The columns of the unworn welding knurls 1440d, 1440e, and 1440f may be in contact with the welding target. However, in the case of the columns of the worn welding knurls 1440g, the welding knurls may not be in contact with the welding target. In some embodiments, as illustrated in FIG. 11, the plurality of entire columns of the unworn welding knurls 1440d, 1440e, and 1440f may ascend to be at a same positions as the columns of the worn welding knurls 1440g.

Referring to FIG. 12, a comparative example shows a state in which one row of the welding knurls of two rows of welding knurls are not in proper contact with the welding target. In some embodiments, the height of the entire welding knurl in row 1 may be adjusted as illustrated in FIG. 9. In some embodiments, two rows of the welding knurls may be in uniform contact with the welding target. Therefore, the weld shape appears to have a uniform shape and size.

Referring to FIG. 13, the comparative example shows a state in which some rows of the welding knurls of the plurality of columns of the welding knurls are not in proper contact with the welding target. In some embodiments, the height of the entire welding knurl in some columns may be adjusted as illustrated in FIG. 11. In some embodiments, all of the welding knurls in plurality of rows may be in uniform contact with the welding target. Therefore, the weld shape appears to have a uniform shape and size.

Hereinafter, a secondary battery manufactured by the ultrasonic welding device according to embodiments, which are described above, will be described in detail with reference to the attached drawings.

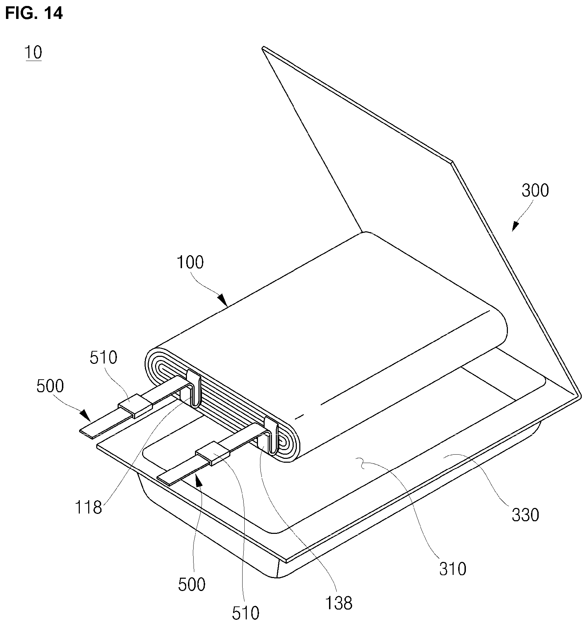

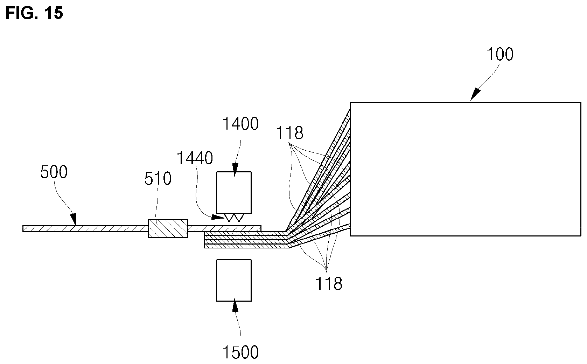

FIG. 14 illustrates a perspective view of an exemplary secondary battery manufactured by the ultrasonic welding device. FIG. 15 illustrates a schematic view of a welding portion of the secondary battery in FIG. 14.

Referring to FIGS. 14 and 15, an exemplary secondary battery 10 may be a pouch type battery. However, all types of secondary batteries in which ultrasonic welding is performed may be included in embodiments of the present disclosure. The exemplary secondary battery 10 may include an electrode assembly 100, a case 300, and a pair of lead tabs 500.

The electrode assembly 100 may be provided by winding or stacking a stack of a negative electrode plate, a separator, and a positive electrode plate, each of which is provided in a thin or film shape. The electrode assembly 100 may be accommodated in the case 300 together with an electrolyte.

The negative electrode plate may include a negative electrode current collector, which is a metal foil, and a negative electrode active material layer applied to the negative electrode current collector. The negative electrode plate may further include a negative electrode non-coating portion to which the negative electrode active material is not applied. The negative electrode current collector may be provided as a metal foil such as copper, a copper alloy, nickel or a nickel alloy. The negative electrode non-coating portion may be notched into a certain shape to become a negative electrode base material tab 118. The negative electrode base material tab 118 may be provided in plurality. The lead tab 500 may be electrically connected to the negative electrode base material tab 118. For example, the negative electrode base material tabs 118 may be gathered into one and welded first and then welded to the lead tab 500. In some embodiments, the above-described ultrasonic welding device 1000 may be used for the welding between the negative electrode base material tabs 118 and the welding between the negative electrode base material tab 118 and the lead tab 500.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The positive electrode plate may include a positive electrode current collector, which is a metal foil, and a positive electrode active material layer applied to the positive electrode current collector. The positive electrode plate may further include a positive electrode non-coating portion to which the positive electrode active material is not applied. The negative electrode current collector may be provided as a metal foil such as aluminum or an aluminum alloy. The positive electrode non-coating portion may be notched into a certain shape to become a positive electrode base material tab 138. The positive electrode tab 138 may be provided in plurality. The lead tab 500 may be electrically connected to the positive electrode tab 138. For example, the positive electrode base material tabs 138 may be gathered into one and welded first and then welded to the lead tab 500. **In** some embodiments, the above-described ultrasonic welding device 1000 may be used for the welding between the positive electrode base material tabs 138 and the welding between the positive electrode base material tab 138 and the lead tab 500.

Meanwhile, as the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90<a≤1.8, 0≤b≤0.5, 0≤c≤0.05); LiₐMn_{2-b}X_{b}O_{4-c}D_{c} (0.90<a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90<a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90<a≤1.8, 0.001≤b≤0.1); LiₐCoG_{b}O₂ (0.90<a≤1.8, 0.001≤b≤0.1); LiₐMn_{1-b}G_{b}O₂ (0.90<a≤1.8, 0.001≤b≤0.1); LiₐMn₂G_{b}O₄ (0.90<a≤1.8, 0.001≤b≤0.1); LiₐMn_{1-g}G_{g}PO₄ (0.90<a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The separator may be interposed between the negative and positive electrode plates to prevent short circuit between the negative and positive electrode plates and enable movement of lithium ions.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof, and may be used alone or in combination of two or more types.

Additionally, when using a carbonate-based solvent, a cyclic carbonate and a chain carbonate may be used in combination.

The case 300 may define an outer appearance of the secondary battery 10 and accommodate the electrode assembly 100. The case 300 may be in the form of a pouch having an accommodation space defined in one surface of the case 300 to accommodate the electrode assembly 100. The case 300 may be referred to as a laminate exterior, a case, a pouch exterior, a pouch case, etc. The case 300 may include a recess 310 and a sealing part 330. For example, the case 300 may be bent to face a plate-shaped exterior, and then, one surface of the case 300 may be pressed or drawn to provide the recess 310. The sealing part 330 may be provided on an outer appearance of the recess 310. In the state in which the electrode assembly 100 is accommodated in the recess 310, the sealing part 330 may be sealed through thermal fusion or the like. In some embodiments, a portion of the lead tab 500 may be exposed to the outside of the case 300 in the state in which an insulating part 510 to be described later is disposed between the sealing parts 330.

The lead tab 500 may be electrically connected to the above-described negative electrode base material tab 118 and the positive electrode base material tab 138 by the ultrasonic welding. The insulating part 510 may be provided on the lead tab 500. The insulating part 510 may be made of an insulating material such as an insulating tape. The lead tab 500 may be insulated from the case 300 by the insulating part 510. For example, the insulating part 510 may be placed on the sealing part 330 of the case 300. In some embodiments, a width of the insulating part 510 may be equal to or greater than a width of the sealing part 330.

Referring to FIG. 15, because the secondary battery 10 described above is welded using the ultrasonic welding device 1000 of the present disclosure, a welding area of the base material tab 118 and the lead tab 500 may be welded by uniformly applying a pressure to improve welding strength and welding quality. That is, according to the embodiments of the present disclosure, the height of the welding knurls 1440 in the welding horn 1400 of the ultrasonic welding device 1000 may be adjusted according to the degree of abrasion of the welding knurls 1440 of the welding horn end. Therefore, the welding target may be contacted and pressed at a uniform pressure during the welding to improve the welding quality. In some embodiments, even though the degree of abrasion of the welding knurl varies depending on the difference in flatness of the welding portion, the uniform welding pressure may be secured.

By way of summation and review, aspects of some embodiments of the present disclosure provide an ultrasonic welding device that is capable of adjusting a height of a welding knurl of a welding horn end without cutting. That is, the ultrasonic welding device according to embodiments include a welding horn with movable welding knurls that may be independently adjusted to provide uniform welding.

However, aspects and features of the present disclosure are not limited to those described above, and other aspects and features not mentioned will be clearly understood by a person skilled in the art from the detailed description, described above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An ultrasonic welding device (1000), comprising:
an anvil configured to support a lower portion of a welding target; and
a welding horn (1400) above the anvil, the welding target being between the welding horn and the anvil, and the welding horn including a body (1410), a head (1420, 1420a) at an end of the body (1410), and movable welding knurls (1440, 1440a, 1440c, 1440g) on a surface of the head (1420, 1420a).

2. The ultrasonic welding device (1000) as claimed in claim 1, wherein the movable welding knurls (1440, 1440a, 1440c, 1440g) are in a configuration to allow for a movement relative to the surface of the head.

3. The ultrasonic welding device (1000) as claimed in claim 1 or 2, wherein the movable welding knurls (1440, 1440a, 1440c, 1440g) are in a configuration to allow for an adjustment of positions of the movable welding knurls (1440, 1440a, 1440c, 1440g) relative to one another and/or relative to the welding target.

4. The ultrasonic welding device (1000) as claimed in any one of claims 1 to 3, wherein the movable welding knurls (1440, 1440a, 1440c, 1440g) are arranged in at least one of a plurality of rows and a plurality of columns.

5. The ultrasonic welding device (1000) as claimed in any one of claims 1 to 4, wherein each of the movable welding knurls (1440, 1440a, 1440c, 1440g) comprises a screw thread (1422) or a screw groove (1442) on at least a portion of an outer surface thereof.

6. The ultrasonic welding device (1000) as claimed in claim 5, wherein the head (1420, 1420a) comprises a screw groove (1442) corresponding to the screw thread (1422) of each of the movable welding knurls (1440, 1440a, 1440c, 1440g) or a screw thread (1422) corresponding to the screw groove (1442) of each of the movable welding knurls (1440, 1440a, 1440c, 1440g).

7. The ultrasonic welding device (1000) as claimed in claim 6, wherein each of the movable welding knurls (1440, 1440a, 1440c, 1440g) is configured to ascend or descend by rotation in a state of being coupled to the head (1420, 1420a).

8. The ultrasonic welding device (1000) as claimed in any one of claims 1 to 4, wherein each of the movable welding knurls (1440, 1440a, 1440c, 1440g) comprises a protrusion (1442a) protruding from an outer surface thereof.

9. The ultrasonic welding device (1000) as claimed in claim 8, wherein:
the head (1420, 1420a) comprises a vertical hole corresponding to each of the movable welding knurls (1440, 1440a, 1440c, 1440g), and a plurality of horizontal holes intersecting the vertical hole, and
the protrusion (1442a) of each of the welding knurls (1440, 1440a, 1440c, 1440g) is insertable into a corresponding vertical hole.

10. The ultrasonic welding device (1000) as claimed in claim 9, wherein the protrusion (1442a) is insertable into one of the plurality of horizontal holes in a state of being coupled to the head (1420, 1420a).

11. The ultrasonic welding device (1000) as claimed in claim 9 or 10, wherein a number of the plurality of horizontal holes intersecting the vertical hole is odd; and wherein, in a basic state, the protrusion (1442a) of each of the movable welding knurls (1440, 1440a, 1440c, 1440g) is insertable into a middle one of the plurality of horizontal holes.

12. The ultrasonic welding device (1000) as claimed in any one of claims 9 to 11,
wherein, in an ascending state, the protrusion (1442a) of each of the movable welding knurls (1440, 1440a, 1440c, 1440g) is insertable into an uppermost one of the plurality of horizontal holes; and/or
wherein, in a descending state, the protrusion (1442a) of each of the movable welding knurls (1440, 1440a, 1440c, 1440g) is insertable into a lowermost one of the plurality of horizontal holes.

13. A method of manufacturing a secondary battery (10), the method comprising:
forming an electrode assembly (100) comprising negative electrode base material tabs (118) and positive electrode base material tabs (138); and
welding a pair of lead tabs (500) to the negative electrode base material tabs (118) and the positive electrode base material tabs (138), respectively, by the ultrasonic welding device (1000) according to any one of claims 1 to 12, such that the pair of lead tabs (500) are electrically connected to the negative electrode base material tabs (118) and the positive electrode base material tabs (138), respectively.

14. A secondary battery (10), comprising:
an electrode assembly (100) comprising negative electrode base material tabs (118) and positive electrode base material tabs (138); and
a pair of lead tabs (500) electrically connected to the negative electrode base material tabs (118) and the positive electrode base material tabs (138), respectively, the negative electrode base material tabs (118) and the positive electrode base material tabs (138) being welded to the lead tabs (500) by the ultrasonic welding device (1000) as claimed in any one of claims 1 to 12.

15. The secondary battery (10) as claimed in claim 14, wherein the negative electrode base material tabs (118) are welded to each other by the ultrasonic welding device (1000); and/or wherein the positive electrode base material tabs (118) are welded to each other by the ultrasonic welding device (1000).
